# EUROPEAN PATENT APPLICATION

(11) **EP 4 761 395 A1**
(43) Date of publication of application: **17.06.2026**
(21) Application number: 24851013.3
(22) Date of filing: 06.08.2024
(51) Int. Cl.: H04W 64/00

(54) **INFORMATION INDICATION METHOD AND APPARATUS, INFORMATION RECEIVING METHOD AND APPARATUS, AND STORAGE MEDIUM**

(30) Priority: 10.08.2023 CN 202311009761
(71) Applicant: Datang Mobile Communications Equipment Co., Ltd., Beijing 100085 (CN)
(72) Inventor: REN, Xiaotao, Beijing 100085 (CN); REN, Bin, Beijing 100085 (CN)
(74) Representative: Studio Torta S.p.A.
(86) International application number: PCT/CN2024/110178
(87) International publication number: WO 2025/031368

(57) **Abstract**

A method for indicating information, a method for receiving information, an apparatus and a storage medium are provided. The method for indicating information includes: sending first control information to a terminal, where the first control information includes one or more of the following indication information: first indication information, where the first indication information is used to indicate that a sidelink transmission associated with the first control information includes a sidelink positioning reference signal (SL PRS) transmission or does not include an SL PRS transmission; second indication information, where the second indication information is used to indicate SL PRS resource information carried in the first control information; third indication information, where the third indication information is used to indicate SL PRS measurement report information carried in a physical sidelink shared channel (PSSCH) associated with the first control information; fourth indication information.

## Description

### CROSS REFERENCE OF RELATED APPLICATION

This application claims a priority to Chinese Patent Application No. 202311009761.9 filed on August 10, 2023 and title "METHOD FOR INDICATING INFORMATION, METHOD FOR RECEIVING INFORMATION, APPARATUS AND STORAGE MEDIUM" the disclosures of which are incorporated in their entirety by reference herein.

### FIELD

The present disclosure relates to the field of wireless communication technologies, and in particular, to a method for indicating information, a method for receiving information, an apparatus, and a storage medium.

### BACKGROUND

In existing New Radio (NR) positioning technologies, downlink positioning reference signals and uplink positioning reference signals are defined on the air interface between a base station and a terminal to complete a terminal positioning based on downlink or uplink positioning reference signals. Considering the requirement for relative positioning between terminals, i.e., sidelink positioning, a sidelink Positioning Reference Signal (SL PRS) transmitted between terminals has also been introduced. This enables terminals to complete the relative positioning process between terminals directly using the SL-PRS without relying on downlink positioning reference signals or uplink positioning reference signals.

Currently, there is no clear indication scheme for SL-PRS related information in sidelink positioning.

### SUMMARY

The present disclosure provides a method for indicating information, a method for receiving information, an apparatus, and a storage medium, to solve the problem of how to indicate SL-PRS related information in sidelink positioning to a terminal.

In a first aspect, the present disclosure provides a method for indicating information, applied to a first communication device, including:
sending first control information to a terminal, where the first control information includes one or more of the following indication information:
first indication information, where the first indication information is used to indicate that a sidelink transmission associated with the first control information includes a sidelink positioning reference signal (SL PRS) transmission or does not include an SL PRS transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate that a PSSCH associated with the first control information carries SL data or does not carry SL data;
fifth indication information, where the fifth indication information is used to indicate SL PRS resource pool type information configured by the first communication device and/or SL PRS resource pool type information that the terminal needs to configure.

**In** some embodiments, the first indication information indicates one of the following through at least 1 bit:
the sidelink transmission associated with the first control information does not include the SL PRS transmission;
the sidelink transmission associated with the first control information includes the SLPRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

In a second aspect, the present disclosure further provides a method for receiving information, applied to a terminal, including:
receiving first control information sent by a first communication device, where the first control information includes one or more of the following indication information:
first indication information, where the first indication information is used to indicate that a sidelink transmission associated with the first control information includes a sidelink positioning reference signal (SL PRS) transmission or does not include an SL PRS transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate that a PSSCH associated with the first control information carries SL data or does not carry SL data;
fifth indication information, where the fifth indication information is used to indicate SL PRS resource pool type information configured by the first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

In a third aspect, the present disclosure further provides a first communication device, including a memory, a transceiver, and a processor;
where the memory is configured to store a computer program; the transceiver is configured to send and receive data under control of the processor; the processor is configured to read the computer program in the memory and perform the following operations:
sending first control information to a terminal, where the first control information includes one or more of the following indication information:
first indication information, where the first indication information is used to indicate that a sidelink transmission associated with the first control information includes a sidelink positioning reference signal (SL PRS) transmission or does not include an SL PRS transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate that a PSSCH associated with the first control information carries SL data or does not carry SL data;
fifth indication information, where the fifth indication information is used to indicate SL PRS resource pool type information configured by the first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

In a fourth aspect, the present disclosure further provides a terminal, including a memory, a transceiver, and a processor;
where the memory is configured to store a computer program; the transceiver is configured to send and receive data under control of the processor; the processor is configured to read the computer program in the memory and perform the following operations:
receiving first control information sent by a first communication device, where the first control information includes one or more of the following indication information:
first indication information, where the first indication information is used to indicate that a sidelink transmission associated with the first control information includes a sidelink positioning reference signal (SL PRS) transmission or does not include an SL PRS transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate that a PSSCH associated with the first control information carries SL data or does not carry SL data;
fifth indication information, where the fifth indication information is used to indicate SL PRS resource pool type information configured by the first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

In a fifth aspect, the present disclosure further provides an apparatus for indicating information, including:
a sending unit, configured to send first control information to a terminal, where the first control information includes one or more of the following indication information:
first indication information, where the first indication information is used to indicate that a sidelink transmission associated with the first control information includes a sidelink positioning reference signal (SL PRS) transmission or does not include an SL PRS transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate that a PSSCH associated with the first control information carries SL data or does not carry SL data;
fifth indication information, where the fifth indication information is used to indicate SL PRS resource pool type information configured by a first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

In a sixth aspect, the present disclosure further provides an apparatus for receiving information, including:
a receiving unit, configured to receive first control information sent by a first communication device, where the first control information includes one or more of the following indication information:
first indication information, where the first indication information is used to indicate that a sidelink transmission associated with the first control information includes a sidelink positioning reference signal (SL PRS) transmission or does not include an SL PRS transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate that a PSSCH associated with the first control information carries SL data or does not carry SL data;
fifth indication information, where the fifth indication information is used to indicate SL PRS resource pool type information configured by the first communication device, and/or SL PRS resource pool type information that a terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

In a seventh aspect, the present disclosure further provides a non-transitory readable storage medium, where the non-transitory readable storage medium stores a computer program, and the computer program is configured to cause a processor to execute the information indication method described in the first aspect above, or to execute the information receiving method described in the second aspect above.

**In** an eighth aspect, the present disclosure further provides a communication device, where the communication device stores a computer program, and the computer program is configured to cause the communication device to execute the information indication method described in the first aspect above, or to execute the information receiving method described in the second aspect above.

**In** a ninth aspect, the present disclosure further provides a processor-readable storage medium, where the processor-readable storage medium stores a computer program, and the computer program is configured to cause a processor to execute the information indication method described in the first aspect above, or to execute the information receiving method described in the second aspect above.

**In** a tenth aspect, the present disclosure further provides a chip product, where the chip product stores a computer program, and the computer program is configured to cause the chip product to execute the information indication method described in the first aspect above, or to execute the information receiving method described in the second aspect above.

The information indication method, information receiving method, apparatus and storage medium provided in the present disclosure allow a first communication device to send first control information to a terminal. The first control information includes at least one of first indication information, second indication information, third indication information, fourth indication information and fifth indication information. Thus, after receiving the first control information, the terminal can determine SL-PRS transmission related information, SL-PRS measurement report related information, SL-PRS resource pool related information, etc., according to the first control information and the indication information carried therein, thereby effectively improving the reception success rate of SL-PRS and the accuracy of sidelink positioning.

### BRIEF DESCRIPTION OF THE DRAWINGS

**In** order to more clearly illustrate the embodiments of the present disclosure or the technical solutions in the related art, a brief introduction to the drawings used in the description of the embodiments or the related art will be provided below. Obviously, the drawings in the following description are only some embodiments of the present disclosure, and for those of ordinary skill in the art, other drawings can also be obtained from these drawings without creative effort.
FIG. 1 is a schematic diagram of positioning using SL-PRS provided by the related art;
FIG. 2 is a schematic flowchart of a method for indicating information provided by an embodiment of the present disclosure;
FIG. 3 is a schematic diagram of sidelink resources provided by an embodiment of the present disclosure;
FIG. 4 is a schematic diagram of second indication information provided by an embodiment of the present disclosure;
FIG. 5 is a schematic diagram of SL PRS measurement report transmission provided by an embodiment of the present disclosure;
FIG. 6 is a schematic diagram of PSSCH transmission provided by an embodiment of the present disclosure;
FIG. 7 is a schematic diagram of first control information transmission provided by an embodiment of the present disclosure;
FIG. 8 is a schematic flowchart of a method for receiving information provided by an embodiment of the present disclosure;
FIG. 9 is a schematic structural diagram of a first communication device provided by an embodiment of the present disclosure;
FIG. 10 is a schematic structural diagram of a terminal provided by an embodiment of the present disclosure;
FIG. 11 is a schematic structural diagram of an apparatus for indicating information provided by an embodiment of the present disclosure; and
FIG. 12 is a schematic structural diagram of an apparatus for receiving information provided by an embodiment of the present disclosure.

### DETAILED DESCRIPTION

In the embodiments of the present disclosure, the term "and/or" describes an association relationship of associated objects, indicating that three relationships may exist. For example, A and/or B may indicate: A exists alone, both A and B exist, or B exists alone. The character "/" generally indicates an "or" relationship between the associated objects.

In the embodiments of the present disclosure, the term "a plurality of" refers to two or more, and other quantifiers are similar thereto.

In the embodiments of the present disclosure, terms such as "first" and "second" are used to distinguish similar objects and are not used to describe a specific order or sequence. It should be understood that the terms used in this way may be interchanged under appropriate circumstances, so that the embodiments of the present disclosure can be implemented in an order other than those illustrated or described herein. Moreover, the objects distinguished by "first", "second" are usually of the same type, and the number of objects is not limited. For example, there may be one first object, or there may be a plurality of first objects.

The technical solutions in the embodiments of the present disclosure will be described clearly and completely with reference to the drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative efforts shall fall within the protection scope of the present disclosure.

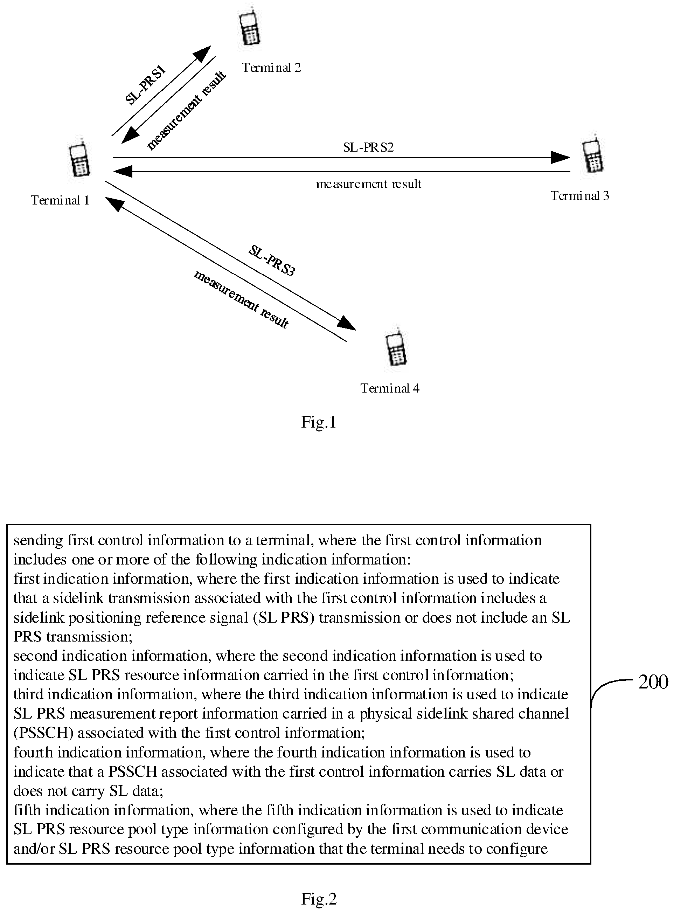

FIG. 1 is a schematic diagram of positioning using SL-PRS provided by the related art. As shown in FIG. 1, terminal 1 uses time-frequency resources to send SL-PRS to terminal 2, terminal 3, and terminal 4 respectively. After receiving the SL-PRS, terminal 2, terminal 3, and terminal 4 send the measurement results back to terminal 1 to assist terminal 1 in completing the positioning calculation.

When a terminal completes SL positioning based on SL-PRS, it needs to determine whether the current sidelink transmission includes SL PRS, and also needs to determine SL PRS resource related information and SL PRS measurement report information, etc. In addition, the resource pool type information configured for the terminal is also helpful for completing SL positioning. However, there is currently no related technical solution on how to send indication information to the terminal so that the terminal can obtain this information.

FIG. 2 is a schematic flowchart of a method for indicating information provided by an embodiment of the present disclosure. The method may be applied to a first communication device. As shown in FIG. 2, the method includes the following steps:
Step 200: sending first control information to a terminal, where the first control information includes one or more of the following indication information:

first indication information, where the first indication information is used to indicate whether a sidelink transmission associated with the first control information includes a sidelink positioning reference signal (SL PRS) transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate whether a PSSCH associated with the first control information carries SL data;
fifth indication information, where the fifth indication information is used to indicate SL PRS resource pool type information configured by the first communication device, and/or SL PRS resource pool type information that the terminal needs to configure.

Specifically, the first communication device may be a network device (e.g., a base station) or a terminal.

The first control information may be any control information, which is not limited in the present disclosure.

**In** some embodiments, the first control information may be carried by one or more of the following carriers: first-stage sidelink control information (SCI), such as SCI format 1A or 1B; second-stage SCI, such as SCI format 2C or 2D; downlink control information (DCI); radio resource control (RRC) signaling, such as Uu RRC signaling or PC5 RRC signaling; sidelink positioning protocol (SLPP) signaling.

The first communication device may send first control information to the terminal. The first control information includes at least one of the first indication information, second indication information, third indication information, fourth indication information, and fifth indication information. Thus, after receiving the first control information, the terminal can determine SL-PRS transmission related information, SL-PRS measurement report related information, SL-PRS resource pool related information, etc., according to the first control information and the indication information carried therein, thereby effectively improving the reception success rate of SL-PRS and the accuracy of sidelink positioning.

In some embodiments, the first indication information indicates one of the following through at least 1 bit:
the sidelink transmission associated with the first control information does not include the SL PRS transmission;
the sidelink transmission associated with the first control information includes the SL PRS transmission.

Specifically, the first indication information may be used to indicate whether the sidelink transmission associated with the first control information includes an SL PRS transmission. There may be various indication methods specifically.

In some embodiments, when indicating, resource pools may not be distinguished to reduce signaling overhead. The first indication information may use at least 1 bit to indicate whether the sidelink transmission associated with the first control information includes an SL PRS transmission or does not include an SL PRS transmission.

For example, 1 bit may be used. When this bit is set to 0, it indicates that the sidelink transmission associated with the first control information does not include an SL PRS transmission. When this bit is set to 1, it indicates that the sidelink transmission associated with the first control information includes an SL PRS transmission.

For example, multiple bits may be used. When these multiple bits are all 0, it indicates that the sidelink transmission associated with the first control information does not include an SL PRS transmission. When these multiple bits are all 1, it indicates that the sidelink transmission associated with the first control information includes an SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

Specifically, SL-PRS may be transmitted in a dedicated resource pool or in a shared resource pool. Dedicated resource pool and shared resource pool are two types of resource pools that can be used for SL-PRS transmission. In the present disclosure, the dedicated resource pool is a resource pool dedicated for SL PRS transmission, and the shared resource pool is a resource pool shared for SL PRS transmission and SL data transmission. In a dedicated resource pool, only SL-PRS and its associated Physical Sidelink Control Channel (PSCCH) can be transmitted. In a shared resource pool, both SL-PRS and SL data unrelated to positioning, such as Physical Sidelink Shared Channel (PSSCH) or Physical Sidelink Feedback Channel (PSFCH), can be transmitted.

In some embodiments, when indicating, dedicated resource pools and shared resource pools may be distinguished to provide more detailed information. The first indication information may use at least 2 bits to indicate whether the sidelink transmission associated with the first control information includes an SL PRS transmission or does not include an SL PRS transmission, and indicate whether the dedicated resource pool and the shared resource pool include SL PRS transmission.

For example, 2 bits may be used. When these 2 bits are set to 00, it indicates that the sidelink transmission associated with the first control information does not include an SL PRS transmission in the dedicated resource pool or an SL PRS transmission in the shared resource pool. When set to 01, it indicates that the sidelink transmission associated with the first control information includes an SL PRS transmission in the dedicated resource pool and does not include an SL PRS transmission in the shared resource pool. When set to 10, it indicates that the sidelink transmission associated with the first control information does not include an SL PRS transmission in the dedicated resource pool and includes an SL PRS transmission in the shared resource pool. When set to 11, it indicates that the sidelink transmission associated with the first control information includes an SL PRS transmission in the dedicated resource pool and an SL PRS transmission in the shared resource pool.

For example, multiple bits may be used, where at least 1 bit indicates whether the sidelink transmission associated with the first control information includes an SL PRS transmission, and at least 1 bit indicates the resource pool type corresponding to the SL PRS transmission.

In some embodiments, the second indication information is used to indicate one of:
the SL PRS resource information carried in the first control information is an SL PRS resource identifier (ID);
the SL PRS resource information carried in the first control information is SL PRS time-frequency resource information.

Specifically, the second indication information may be used to indicate the SL PRS resource information carried in the first control information.

In some embodiments, the second indication information may indicate that the SL PRS resource information carried in the first control information is an SL PRS resource ID. Carrying the SL PRS resource ID in the first control information can reduce signaling overhead. In some embodiments, each SL PRS resource ID may uniquely determine a resource occupation of one SL PRS resource within one slot, so that the terminal can determine the SL PRS resource according to the SL PRS resource ID.

In some embodiments, the second indication information may indicate that the SL PRS resource information carried in the first control information is SL PRS time-frequency resource information. Carrying SL PRS time-frequency resource information in the first control information can provide the terminal with more detailed SL PRS resource information, which is beneficial for improving the reception success rate of SL PRS.

In some embodiments, the SL PRS time-frequency resource information includes one or more of:

### (1) Information for indicating a granularity of SL PRS resource allocation.

In some embodiments, the granularity of SL PRS resource allocation includes one or more of: a sub-channel level; a resource block (RB) level; an SL PRS resource level; an SL PRS resource set level.

### (2) Information for indicating an SL PRS time-domain resource allocation.

In some embodiments, the information for indicating the SL PRS time-domain resource allocation includes one or more of: a start time-domain unit index number of an SL PRS resource; an end time-domain unit index number of an SL PRS resource; a quantity of consecutive time-domain units of an SL PRS resource.

The time-domain unit may include a subframe, a slot, a symbol, or other units divided in the time domain, which is not specifically limited.

### (3) Information for indicating an SL PRS frequency-domain resource allocation.

In some embodiments, the information for indicating the SL PRS frequency-domain resource allocation includes one or more of: a start frequency-domain unit index number of an SL PRS resource; an end frequency-domain unit index number of an SL PRS resource; a quantity of consecutive frequency-domain units of an SL PRS resource.

The frequency-domain unit may include a sub-channel, an RB, a subcarrier, or other units divided in the frequency domain, which is not specifically limited.

### (4) Information for indicating an SL PRS resource element (RE) offset allocation.

In some embodiments, the information for indicating the SL PRS RE offset allocation includes one or more of: an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

Specifically, since the SL PRS dedicated resource pool can be used to transmit SL PRS but cannot transmit PSSCH, the measurement report corresponding to the SL PRS in the dedicated resource pool can only be transmitted in the PSSCH in the shared resource pool. The third indication information may be used to indicate the SL PRS measurement report information carried in the PSSCH associated with the first control information, for example, whether the PSSCH associated with the first control information carries an SL PRS measurement report, and whether the carried SL PRS measurement report corresponds to the SL PRS measurement report of the dedicated resource pool or the shared resource pool, etc.

For example, 2 bits may be used. When these 2 bits are set to 00, it indicates that the PSSCH associated with the first control information does not carry an SL PRS measurement report. When set to 01, it indicates that the SL PRS measurement report carried in the PSSCH associated with the first control information is a measurement report corresponding to an SL PRS in a shared resource pool. When set to 10, it indicates that the SL PRS measurement report carried in the PSSCH associated with the first control information is a measurement report corresponding to an SL PRS in a dedicated resource pool. When set to 11, it indicates that the SL PRS measurement report carried in the PSSCH associated with the first control information includes a measurement report corresponding to an SL PRS in a shared resource pool and a measurement report corresponding to an SL PRS in a dedicated resource pool.

For example, multiple bits may be used, where at least 1 bit indicates whether the PSSCH associated with the first control information carries an SL PRS measurement report, and at least 1 bit indicates the resource pool type corresponding to the SL PRS measurement report.

In some embodiments, the third indication information may further include one or more of:
(1) SLPP session ID. This ID is associated with the SL PRS and the measurement report corresponding to the SL PRS.
(2) Measurement report configuration information. This information indicates the configuration of the measurement report, including periodicity and other information.
(3) Corresponding PSSCH resource reservation information for the measurement report. That is, the time-frequency resource information of the corresponding PSSCH.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

Specifically, the fourth indication information may be used to indicate whether the PSSCH associated with the first control information carries SL data, so that the terminal can determine the priority of SL PRS processing based on the fourth indication information. For example, if the PSSCH carries SL data, the terminal may prioritize receiving and processing the PSSCH, because in most cases the priority of SL data in the PSSCH is higher than that of SL positioning. If the PSSCH does not carry SL data but only carries some MAC CE and MAC header, the terminal may prioritize processing SL PRS, because in the absence of SL data, the priority of SL positioning is higher.

In a case where the PSSCH associated with the first control information does not carry SL data, the PSSCH associated with the first control information may carry a Media Access Control - Control Element (MAC CE) and a MAC header. The MAC CE or the MAC header includes a Layer-2 source ID, which may be, for example, a Layer-2 source ID related to SL PRS, the terminal, or a service, which is not specifically limited in the present disclosure.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

Specifically, the fifth indication information may be used to indicate the resource pool type information configured by the first communication device or to indicate the resource pool type that the terminal should configure.

For example, the fifth indication information may indicate that the SL PRS resource pool configured by the first communication device is a shared resource pool; or, the fifth indication information may indicate that the SL PRS resource pool configured by the first communication device is a dedicated resource pool; or, the fifth indication information may indicate that the SL PRS resource pool configured by the first communication device includes a shared resource pool and a dedicated resource pool. Thus, the terminal can determine the resource pool type configured in the first communication device according to the fifth indication information, which helps the terminal better receive SL PRS.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

Specifically, the SL PRS resource pool type information that the terminal needs to configure refers to the resource pool configuration scheme recommended by the first communication device for the terminal, which helps the terminal better send SL PRS.

For example, the fifth indication information may indicate that the terminal needs to configure a shared resource pool, i.e., recommend the terminal to configure a shared resource pool; or, the fifth indication information may indicate that the terminal needs to configure a dedicated resource pool, i.e., recommend the terminal to configure a dedicated resource pool; or, the fifth indication information may indicate that the terminal needs to configure a shared resource pool and a dedicated resource pool, i.e., recommend the terminal to configure both a shared resource pool and a dedicated resource pool. This helps the terminal better send SL PRS.

In some embodiments, the first control information may further include one or more of: a source terminal ID; a target terminal ID; a resource reservation period; an SL-PRS priority; a broadcast type; an SL-PRS request; a terminal type. The content of each piece of information corresponds to the function of the first control information, which is not specifically limited in the present disclosure.

The methods provided by the above embodiments of the present disclosure are illustrated below with examples of specific application scenarios.

Example 1: An example related to the first indication information, taking terminal A sending first control information to terminal B as an example.

Terminal A sends first control information to terminal B, and the first control information contains first indication information. The first indication information indicates whether the sidelink transmission associated with the first control information includes SL PRS. Terminal B receives the SL PRS sent by terminal A according to the first control information.

As described above, the first indication information indicates whether the sidelink transmission associated with the first control information includes an SL PRS transmission. This indication includes the following two indication schemes:
Indication scheme 1: The first indication information uses at least 1 bit to indicate whether the sidelink transmission associated with the first control information includes an SL PRS transmission (this scheme does not distinguish between dedicated resource pools and shared resource pools).
Option 1: indicates that the sidelink transmission associated with the first control information does not include an SL PRS transmission;
Option 2: indicates that the sidelink transmission associated with the first control information includes an SL PRS transmission.

Here, Option 1 and Option 2 in Indication scheme 1 refer to two different bit values represented by at least 1 bit. For example: assuming that 1 bit is used to indicate whether the sidelink transmission associated with the first control information includes an SL PRS transmission, Option 1 may be the value of this 1 bit being 0, and Option 2 may be the value of this 1 bit being 1. The values can also be that a 1-bit value of 1 indicates Option 1, and a 1-bit value of 0 indicates Option 2. This is exemplary, and other values and corresponding methods known to those skilled in the art can also be applied here. Moreover, for the bit value examples mentioned in this text, the specific value is 0 or 1, and the correspondence between the value and the meaning it represents can be swapped. For example, in an example where bit 0 represents meaning A and bit 1 represents B, they can be swapped to bit 0 representing meaning B and bit 1 representing A. For other numbers of bits, such as 2 bits, 3 bits, or even more bits, it should be understood in the same way.

Indication scheme 2: The first indication information uses at least 2 bits to indicate whether the sidelink transmission associated with the first control information includes an SL PRS transmission (this scheme distinguishes between dedicated resource pools and shared resource pools).
Option 1: indicates that the sidelink transmission associated with the first control information does not include an SL PRS transmission in a dedicated resource pool or an SL PRS transmission in a shared resource pool;
Option 2: indicates that the sidelink transmission associated with the first control information includes an SL PRS transmission in a dedicated resource pool and does not include an SL PRS transmission in a shared resource pool;
Option 3: indicates that the sidelink transmission associated with the first control information does not include an SL PRS transmission in a dedicated resource pool and includes an SL PRS transmission in a shared resource pool;
Option 4: indicates that the sidelink transmission associated with the first control information includes an SL PRS transmission in a dedicated resource pool and an SL PRS transmission in a shared resource pool.

Here, Option 1, Option 2, Option 3, and Option 4 in Indication scheme 2 refer to four different bit values represented by at least 2 bits. For example: assuming that 2 bits are used to indicate whether the sidelink transmission associated with the first control information includes an SL PRS transmission, Option 1 may be the value of these 2 bits being 00, Option 2 may be 01, Option 3 may be 10, and Option 4 may be 11.

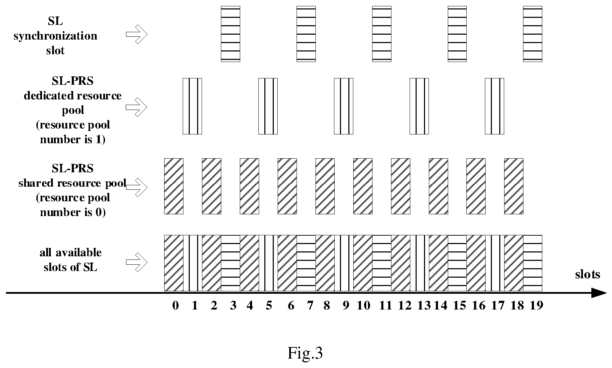

FIG. 3 is a schematic diagram of sidelink resources provided by an embodiment of the present disclosure. As shown in FIG. 3, each long strip block in the figure represents a slot. The fourth row, "All available sidelink slots", shows a total of 20 slots. The slots represented by long strip blocks filled with horizontal lines indicate the slot set used for S-SSB transmission (i.e., the sidelink synchronization slot set {3, 7, 11, 15, 19}, shown in the first row of slots in the figure). These slots can only be used to transmit S-SSB and cannot be used to transmit other signals or channels. The slots represented by long strip blocks filled with vertical lines indicate the slot set of the sidelink positioning dedicated resource pool (i.e., the sidelink positioning dedicated resource pool slot set {1, 5, 9, 13, 17}, shown in the second row of slots in the figure, which can only be used to transmit SL-PRS). The slots represented by long strip blocks filled with diagonal lines are the sidelink shared resource pool slot set (i.e., the sidelink resource pool slot set {0, 2, 4, 6, 8, 10, 12, 14, 16, 18}, shown in the third row of slots in the figure). These slots can be used for both sidelink data communication (transmitting PSSCH) and sidelink positioning (transmitting SL-PRS). Since the sidelink dedicated resource pool can only be used to transmit SL-PRS and cannot transmit other sidelink communication channels or signals, transmitting SL-PRS in the dedicated resource pool can avoid collisions between SL-PRS and PSCCH/PSSCH/PSFCH/SL CSI-RS and other sidelink communication channels or signals. However, within the dedicated resource pool, collisions between two SL-PRSs may still occur, i.e., both parties transmit simultaneously in the same slot. In the shared resource pool, collisions may occur between SL-PRS and PSCCH/PSSCH/PSFCH/SL CSI-RS and other sidelink communication channels or signals, and collisions between two SL-PRSs may also occur.

For Indication scheme 1, if 1 bit indicates Option 2, it means that the sidelink transmission associated with the first control information includes an SL PRS transmission, and this SL PRS transmission may be in an SL PRS dedicated resource pool or in an SL PRS shared resource pool.

For Indication scheme 2, if 2 bits indicate Option 3, it means that the sidelink transmission associated with the first control information includes an SL PRS transmission, and this SL PRS transmission occurs in an SL PRS shared resource pool, not in an SL PRS dedicated resource pool.

Using this indication method of Example 1, the terminal can determine, based on the first indication information, whether the sidelink transmission associated with the first control information includes SL PRS, and if so, the resource pool type information used by this SL-PRS transmission, thereby enabling the terminal to complete the reception and decoding of SL-PRS based on the first indication information and perform sidelink positioning based on SL-PRS.

Example 2: An example related to the second indication information, taking terminal A sending first control information to terminal B as an example.

Terminal A sends first control information to terminal B, and the first control information contains second indication information. The second indication information indicates the SL PRS resource information carried in the first control information. Terminal B receives the SL PRS sent by terminal A according to the first control information.

The specific second indication information is as follows:

The second indication information indicates the SL PRS resource information carried in the first control information. The second indication information can indicate whether the first control information carries SL PRS resource ID information or SL PRS time-frequency resource information.

An SL PRS resource ID can uniquely determine a resource occupation of one SL PRS resource within one slot.

The SL PRS time-frequency resource information may contain information for indicating a granularity of SL PRS resource allocation, including at least one of the following granularities: sub-channel level; RB level; SL PRS resource level; SL PRS resource set level.

The SL PRS time-frequency resource information may contain information for indicating an SL PRS time-domain resource allocation, including at least one of the following information: a start symbol index number of an SL PRS resource, an end symbol index number of an SL PRS resource, a quantity of consecutive symbols of an SL PRS resource.

The SL PRS time-frequency resource information may contain information for indicating an SL PRS frequency-domain resource allocation, including at least one of the following information: a start RB index number of an SL PRS resource, an end RB index number of an SL PRS resource, a quantity of consecutive RBs of an SL PRS resource.

The SL PRS time-frequency resource information may contain information for indicating an SL PRS RE offset allocation, including at least one of the following information: an RE offset of an SL PRS resource, a comb size of an SL PRS resource.

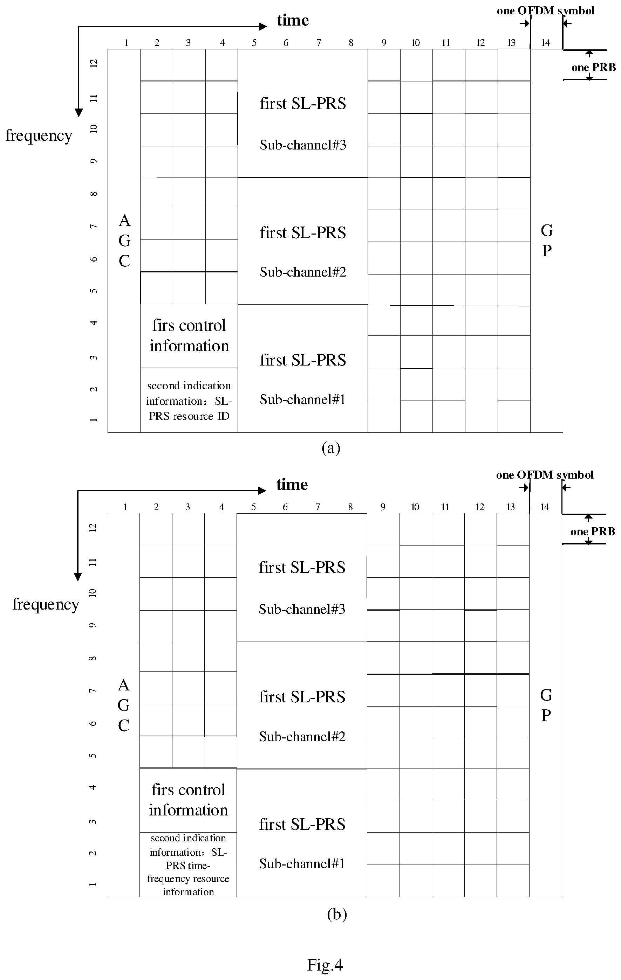

FIG. 4 is a schematic diagram of second indication information provided by an embodiment of the present disclosure. As shown in part (a) of FIG. 4, if the second indication information indicates that the first control information carries SL PRS resource ID information, then since there is a one-to-one correspondence between SL PRS resource IDs and SL PRS time-frequency resource configuration information, and an SL PRS resource ID uniquely determines a resource occupation of one SL PRS resource within one slot, terminal B can obtain the SL PRS time-frequency resource configuration information through the SL PRS resource ID in the second indication information based on the pre-configured mapping relationship between SL PRS resource IDs and SL PRS time-frequency resource configuration information.

As shown in part (b) of FIG. 4, if the second indication information indicates that the first control information carries SL PRS configuration information, the SL PRS time-frequency resource information contains information for indicating a granularity of SL PRS resource allocation. The granularity shown in the figure is the sub-channel level. As shown, the resources of the first SL-PRS can be divided into three resources at the sub-channel granularity (the resource corresponding to sub-channel #1, the resource corresponding to sub-channel #2, and the resource corresponding to sub-channel #3). Both parts (a) and (b) of FIG. 4 show the division of the first SL-PRS resources at the sub-channel granularity. The difference is that part (a) indicates the SL PRS resource ID and does not indicate the granularity of SL PRS resource allocation, while part (b) indicates the granularity of SL PRS resource allocation.

In the case where the second indication information indicates SL PRS time-frequency resource information, specific SL PRS time-frequency resource configuration information can also be carried in the first control information. Taking time-domain resource allocation information as an example:

The index number of the start OFDM symbol occupied by SL-PRS is #5, the index number of the end OFDM symbol is #8, and the number of OFDM symbols is 4. This OFDM symbol index number refers to the OFDM index within a slot.

The time-domain information may also be the OFDM symbol index number within a subframe. Since a subframe may contain 1 slot (SCS=15kHz), 2 slots (SCS=30kHz), 4 slots (SCS=60kHz), 8 slots (SCS=120kHz), etc., if the time-domain information is the OFDM symbol index number within a subframe, a slot index number needs to be added before the OFDM symbol index number within the slot. Assuming the current slot where SL-PRS is located is #3, then the index number of the start OFDM symbol occupied by the first SL-PRS is: symbol #5 within slot #3, and the index number of the end OFDM symbol is symbol #8 within slot #3.

The time-domain information may also be the OFDM symbol index number within a radio frame. Since a radio frame contains 10 subframes, and a subframe may contain 1 slot (SCS=15kHz), 2 slots (SCS=30kHz), 4 slots (SCS=60kHz), 8 slots (SCS=120kHz), etc., if the time-domain information is the OFDM symbol index number within a radio frame, a subframe index number needs to be added before the OFDM symbol index number within the subframe. Assuming the current subframe where SL-PRS is located is #6 and the slot is #3, then the index number of the start OFDM symbol occupied by the first SL-PRS is: { subframe #6, slot #3, symbol #5}, and the index number of the end OFDM symbol is {subframe #6, slot #3, symbol #8}.

In addition, it may also include SL PRS frequency-domain resource allocation information, SL PRS RE offset allocation information, etc.

Using this indication method of Example 2, the terminal can determine, based on the second indication information, whether the first control information carries SL PRS resource ID information or SL PRS time-frequency resource information, thereby enabling the terminal to complete the reception and decoding of SL-PRS and perform sidelink positioning based on SL-PRS.

Example 3: An example related to the third indication information, taking terminal A sending first control information to terminal B as an example.

Terminal A sends first control information to terminal B, and the first control information contains third indication information. The third indication information indicates the SL PRS measurement report information carried in the PSSCH associated with the first control information. Terminal B receives the SL PRS measurement report sent by terminal A according to the first control information.

The specific third indication information is as follows:
The third indication information indicates the SL PRS measurement report information carried in the PSSCH associated with the first control information. The third indication information can indicate whether the SL PRS measurement report carried in the PSSCH corresponds to the measurement report of the SL PRS in a shared resource pool or the measurement report of the SL PRS in a dedicated resource pool.

Indication scheme 3: The third indication information uses at least 2 bits to indicate the SL PRS measurement report information carried in the PSSCH associated with the first control information (this scheme distinguishes between dedicated resource pools and shared resource pools).
Option 1: indicates that the PSSCH associated with the first control information does not carry an SL PRS measurement report;
Option 2: indicates that the SL PRS measurement report carried in the PSSCH associated with the first control information is a measurement report corresponding to an SL PRS in a shared resource pool;
Option 3: indicates that the SL PRS measurement report carried in the PSSCH associated with the first control information is a measurement report corresponding to an SL PRS in a dedicated resource pool;
Option 4: indicates that the SL PRS measurement report carried in the PSSCH associated with the first control information includes a measurement report corresponding to an SL PRS in a shared resource pool and a measurement report corresponding to an SL PRS in a dedicated resource pool.

Here, Option 1, Option 2, Option 3, and Option 4 in Indication scheme 3 refer to four different bit values represented by at least 2 bits. For example: assuming that 2 bits are used to indicate the SL PRS measurement report information carried in the PSSCH associated with the first control information, Option 1 may be the value of these 2 bits being 00, Option 2 may be 01, Option 3 may be 10, and Option 4 may be 11.

The third indication information may also carry an SLPP session ID, measurement report configuration information, and corresponding PSSCH resource reservation information for the measurement report.

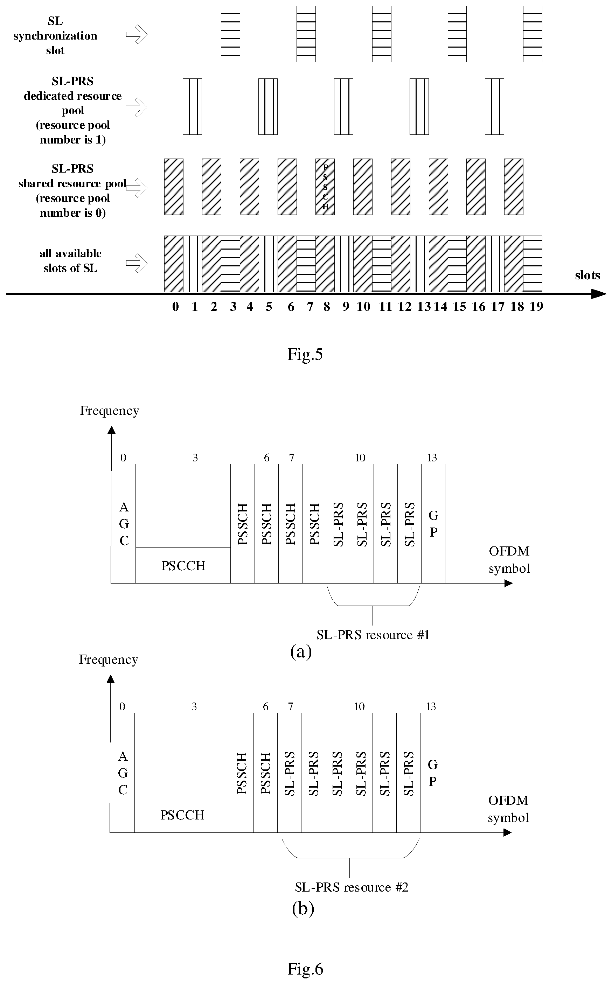

FIG. 5 is a schematic diagram of SL PRS measurement report transmission provided by an embodiment of the present disclosure. The meanings of the slots represented by long strip blocks in FIG. 5 are the same as those in FIG. 3 and will not be repeated here. As shown in FIG. 5, the SL PRS dedicated resource pool transmits SL PRS but cannot transmit PSSCH. Therefore, the measurement report corresponding to the SL PRS in the dedicated resource pool can only be transmitted in the PSSCH in the shared resource pool (as indicated by the long strip block labeled PSSCH). Assuming that the third indication information uses 2 bits to indicate the SL PRS measurement report information carried in the PSSCH, dedicated and shared resource pools can be distinguished. Assuming these 2 bits indicate Option 3, i.e., the SL PRS measurement report carried in the PSSCH corresponds to the measurement report of the SL PRS in a dedicated resource pool, then the PSSCH sent in the shared resource pool actually carries the measurement report of the SL PRS in the dedicated resource pool.

In addition, the following information can be carried in the third indication information so that terminal B can accurately receive the measurement report information:
SLPP session ID: This ID is associated with the SL PRS and the measurement report corresponding to the SL PRS;
Measurement report configuration information: indicates the configuration of the measurement report, including periodicity and other information;
PSSCH resource reservation information for the measurement report: i.e., the time-frequency resource information of the PSSCH.

Using this indication method of Example 3, the terminal can determine the SL PRS measurement report information carried in the PSSCH based on the third indication information, thereby enabling the terminal to complete the reception of the SL-PRS measurement report based on the third indication information and perform sidelink positioning based on the SL-PRS measurement report information.

Example 4: An example related to the fourth indication information, taking terminal A sending first control information to terminal B as an example.

Terminal A sends first control information to terminal B, and the first control information contains fourth indication information. The fourth indication information indicates whether the PSSCH associated with the first control information carries SL data. Terminal B receives the PSSCH sent by terminal A according to the first control information.

The specific fourth indication information is as follows:
The fourth indication information indicates whether the PSSCH associated with the first control information carries SL data.

In a case where the PSSCH does not carry SL data, the PSSCH carries a MAC CE and a MAC header, which include a Layer-2 source ID.

FIG. 6 is a schematic diagram of PSSCH transmission provided by an embodiment of the present disclosure. As shown in part (a) of FIG. 6, one slot contains 14 OFDM symbols, where PSCCH occupies 4 symbols, PSSCH occupies 4 symbols, and SL PRS occupies 4 symbols. According to the indication of the fourth indication information, the PSSCH carries SL data at this time. As shown in part (b) of FIG. 6, according to the information of the fourth indication information, the PSSCH does not carry SL data at this time, so the PSSCH only occupies 2 symbols. Although the PSSCH does not carry SL data, it still carries a MAC CE and a MAC header, which include Layer-2 source ID information.

If the PSSCH carries SL data, terminal B will prioritize receiving and processing the PSSCH, because in most cases the priority of SL data in the PSSCH is higher than that of SL positioning. If the PSSCH does not carry SL data but only carries some MAC CE and MAC header, then terminal B will prioritize processing SL PRS, because in the absence of SL data, the priority of SL positioning is higher.

Using this indication method of Example 4, the terminal can determine, based on the fourth indication information, whether the PSSCH associated with the first control information carries SL data, thereby enabling the terminal to complete the reception of PSSCH and SL PRS based on the fourth indication information and perform sidelink positioning based on SL-PRS.

Example 5: An example related to the fifth indication information, taking terminal A sending first control information to terminal B as an example.

Terminal A sends first control information to terminal B, and the first control information contains fifth indication information. The fifth indication information indicates the resource pool type information configured by terminal A and/or indicates the resource pool type information that terminal B needs to configure. Terminal B receives or sends SL PRS and/or PSSCH according to the first control information.

The specific fifth indication information is as follows (1) and/or (2):
(1) The resource pool type information configured by terminal A includes: information that terminal A has configured an SL PRS dedicated resource pool and/or an SL PRS shared resource pool.
   Option 1: indicates that terminal A has configured an SL PRS shared resource pool;
   Option 2: indicates that terminal A has configured an SL PRS dedicated resource pool;
   Option 3: indicates that terminal A has configured both an SL PRS shared resource pool and an SL PRS dedicated resource pool.

Here, Option 1, Option 2, and Option 3 refer to three different options that the fifth indication information can indicate regarding the resource pool type information configured by terminal A.

In some implementations, at least 2 bits may be used to indicate the resource pool type information configured by terminal A. Option 1, Option 2, and Option 3 refer to three different bit values represented by at least 2 bits. For example: assuming 2 bits are used to indicate the resource pool type information configured by terminal A, Option 1 may be the value of these 2 bits being 01, Option 2 may be 10, and Option 3 may be 11.

(2) The resource pool type information that terminal B needs to configure includes: information that terminal B needs to configure an SL PRS dedicated resource pool and/or an SL PRS shared resource pool.
Option 1: indicates that terminal B needs to configure an SL PRS shared resource pool;
Option 2: indicates that terminal B needs to configure an SL PRS dedicated resource pool;
Option 3: indicates that terminal B needs to configure both an SL PRS shared resource pool and an SL PRS dedicated resource pool.

Here, Option 1, Option 2, and Option 3 refer to three different options that the fifth indication information can indicate regarding the resource pool type information that terminal B needs to configure.

In some implementations, at least 2 bits may be used to indicate the resource pool type information that terminal B needs to configure. Option 1, Option 2, and Option 3 refer to three different bit values represented by at least 2 bits. For example: assuming 2 bits are used to indicate the resource pool type information that terminal B needs to configure, Option 1 may be the value of these 2 bits being 01, Option 2 may be 10, and Option 3 may be 11.

For terminal B, by obtaining the SL PRS resource pool type information configured by terminal A through the fifth indication information, it can help better receive SL PRS. Alternatively, for terminal B, by obtaining the SL PRS resource pool type information that terminal B needs to configure through the fifth indication information, this information is the resource pool configuration scheme recommended by terminal A for terminal B, which helps better send SL PRS.

Using this indication method of Example 5, terminal B can determine, based on the fifth indication information, the SL PRS resource pool type information configured by terminal A, which helps better receive SL PRS. Alternatively, terminal B can determine, based on the fifth indication information, the SL PRS resource pool type information that terminal B needs to configure, which helps better send SL PRS, and perform sidelink positioning based on SL-PRS.

Example 6: An example related to the carrier of the first control information, taking terminal A sending first control information to terminal B as an example.

Terminal A sends first control information to terminal B. The first control information contains at least one of the first indication information, second indication information, third indication information, fourth indication information, and fifth indication information. Terminal B receives or sends SL PRS and/or PSSCH according to the first control information.

The specific carrier information of the first control information may have the following multiple situations:
The first control information is carried by first-stage SCI, such as SCI format 1A or 1B;
The first control information is carried by second-stage SCI, such as SCI format 2C or 2D;
The first control information is carried by RRC signaling, such as Uu RRC or PC5 RRC signaling;
The first control information is carried by SLPP signaling;
The first control information is carried by a mixture of the above multiple carriers. For example, the first indication information is indicated by first-stage SCI, the second indication information is indicated by PC5 RRC signaling, and the third indication information is carried by SLPP signaling, etc.

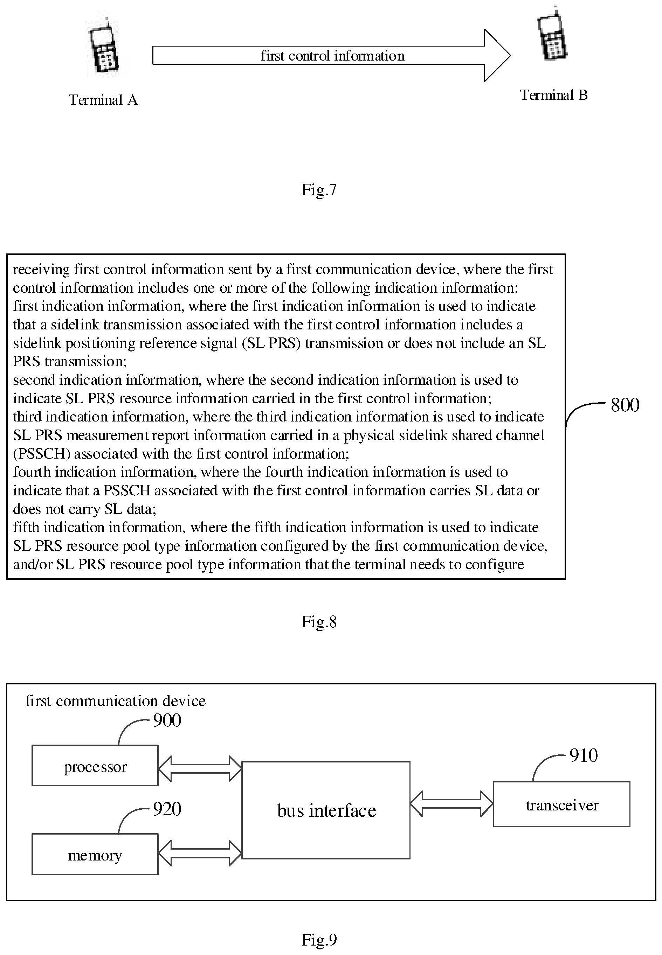

FIG. 7 is a schematic diagram of first control information transmission provided by an embodiment of the present disclosure. As shown in FIG. 7, terminal A sends first control information to terminal B. If SCI is used for carrying, since SCI is directly carried by a physical layer channel, the delay is low, but the physical layer signaling overhead is high. If RRC or SLPP higher-layer signaling is used for carrying, it does not occupy physical layer signaling, but the delay is higher. The first control information can also be carried by a mixture of the above multiple carriers. For example, the first indication information is indicated by first-stage SCI, the second indication information is indicated by PC5 RRC signaling, and the third indication information is carried by SLPP signaling. This can achieve a balance between physical layer signaling overhead and delay.

Using this carrying method for the first control information in Example 6, the terminal can select an appropriate carrying method for the first control information based on comprehensive consideration of physical layer signaling overhead and delay, thereby enabling the terminal to send or receive SL PRS and complete sidelink positioning based on the first control information, while meeting the requirements for physical layer signaling overhead and delay.

FIG. 8 is a schematic flowchart of a method for receiving information provided by an embodiment of the present disclosure. The method may be applied to a terminal. As shown in FIG. 8, the method includes the following steps:
Step 800: receiving first control information sent by a first communication device, where the first control information includes one or more of the following indication information:
first indication information, where the first indication information is used to indicate whether a sidelink transmission associated with the first control information includes a sidelink positioning reference signal (SL PRS) transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate whether a PSSCH associated with the first control information carries SL data;
fifth indication information, where the fifth indication information is used to indicate SL PRS resource pool type information configured by the first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

The methods provided by various embodiments of the present disclosure are based on the same application concept. Therefore, the implementation of each method can refer to each other, and repeated descriptions are omitted.

The methods and apparatuses provided by various embodiments of the present disclosure are based on the same application concept. Since the principles of solving problems by the methods and apparatuses are similar, the implementation of the apparatuses and methods can refer to each other, and repeated descriptions are omitted.

FIG. 9 is a schematic structural diagram of a first communication device provided by an embodiment of the present disclosure. As shown in FIG. 9, the first communication device includes a memory 920, a transceiver 910, and a processor 900; where the processor 900 and the memory 920 may also be physically arranged separately.

The memory 920 is configured to store a computer program; the transceiver 910 is configured to send and receive data under the control of the processor 900.

Specifically, the transceiver 910 is configured to receive and send data under the control of the processor 900.

**In** FIG. 9, the bus architecture may include any number of interconnected buses and bridges, specifically linking various circuits represented by one or more processors represented by the processor 900 and the memory represented by the memory 920. The bus architecture may also link various other circuits such as peripherals, voltage regulators, power management circuits, etc., which are well known in the art, and therefore will not be further described in the present disclosure. The bus interface provides an interface. The transceiver 910 may be multiple elements, i.e., including a transmitter and a receiver, providing units for communicating with various other devices on transmission media. These transmission media include wireless channels, wired channels, optical cables, and other transmission media.

The processor 900 is responsible for managing the bus architecture and general processing, and the memory 920 may store data used by the processor 900 when performing operations.

The processor 900 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor 900, by calling the computer program stored in the memory 920, is configured to perform any method provided by the embodiments of the present disclosure according to the obtained executable instructions, for example: sending first control information to a terminal, where the first control information includes one or more of the following indication information: first indication information, where the first indication information is used to indicate whether a sidelink transmission associated with the first control information includes a sidelink positioning reference signal (SL PRS) transmission; second indication information, where the second indication information is used to indicate SL PRS resource information carried in the first control information; third indication information, where the third indication information is used to indicate SL PRS measurement report information carried in a physical sidelink shared channel (PSSCH) associated with the first control information; fourth indication information, where the fourth indication information is used to indicate whether a PSSCH associated with the first control information carries SL data; fifth indication information, where the fifth indication information is used to indicate SL PRS resource pool type information configured by the first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

**In** some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

**In** some embodiments, the first control information further includes one or more of:
a source terminal ID; a target terminal ID; a resource reservation period; an SL-PRS priority; a broadcast type; an SL-PRS request; a terminal type.

**In** some embodiments, the dedicated resource pool is a resource pool dedicated for SL PRS transmission, and the shared resource pool is a resource pool shared for SL PRS transmission and SL data transmission.

**In** some embodiments, the first control information is carried by one or more of:
first-stage sidelink control information (SCI); second-stage SCI; downlink control information (DCI); radio resource control (RRC) signaling; SLPP signaling.

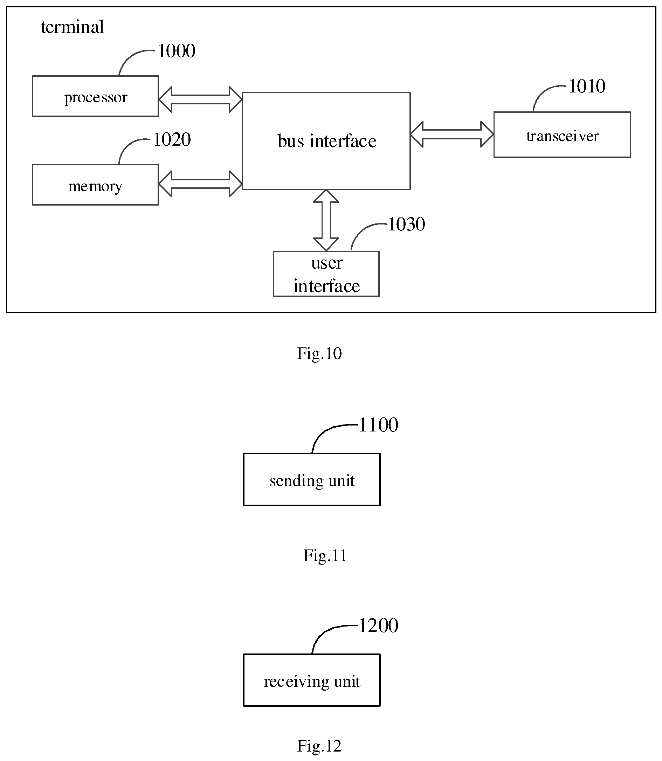

FIG. 10 is a schematic structural diagram of a terminal provided by an embodiment of the present disclosure. As shown in FIG. 10, the terminal includes a memory 1020, a transceiver 1010, and a processor 1000; where the processor 1000 and the memory 1020 may also be physically arranged separately.

The memory 1020 is configured to store a computer program; the transceiver 1010 is configured to send and receive data under the control of the processor 1000.

Specifically, the transceiver 1010 is configured to receive and send data under the control of the processor 1000.

**In** FIG. 10, the bus architecture may include any number of interconnected buses and bridges, specifically linking various circuits represented by one or more processors represented by the processor 1000 and the memory represented by the memory 1020. The bus architecture may also link various other circuits such as peripherals, voltage regulators, power management circuits, etc., which are well known in the art, and therefore will not be further described in the present disclosure. The bus interface provides an interface. The transceiver 1010 may be multiple elements, i.e., including a transmitter and a receiver, providing units for communicating with various other devices on transmission media. These transmission media include wireless channels, wired channels, optical cables, and other transmission media. For different user equipments, the user interface 1030 may also be an interface capable of externally or internally connecting required devices, including but not limited to a keypad, a display, a speaker, a microphone, a joystick, etc.

The processor 1000 is responsible for managing the bus architecture and general processing, and the memory 1020 may store data used by the processor 1000 when performing operations.

The processor 1000 may be a CPU, an ASIC, an FPGA, or a CPLD. The processor may also adopt a multi-core architecture.

The processor 1000, by calling the computer program stored in the memory 1020, is configured to perform any method provided by the embodiments of the present disclosure according to the obtained executable instructions, for example: receiving first control information sent by a first communication device, where the first control information includes one or more of the following indication information: first indication information, where the first indication information is used to indicate whether a sidelink transmission associated with the first control information includes a sidelink positioning reference signal (SL PRS) transmission; second indication information, where the second indication information is used to indicate SL PRS resource information carried in the first control information; third indication information, where the third indication information is used to indicate SL PRS measurement report information carried in a physical sidelink shared channel (PSSCH) associated with the first control information; fourth indication information, where the fourth indication information is used to indicate whether a PSSCH associated with the first control information carries SL data; fifth indication information, where the fifth indication information is used to indicate SL PRS resource pool type information configured by the first communication device, and/or SL PRS resource pool type information that the terminal needs to configure.

**In** some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

It should be noted here that the first communication device and the terminal provided by the embodiments of the present disclosure can implement all the method steps implemented by the above method embodiments and achieve the same technical effects. Details and beneficial effects that are the same as those in the method embodiments are not repeated here.

FIG. 11 is a schematic structural diagram of an apparatus for indicating information provided by an embodiment of the present disclosure. As shown in FIG. 11, the apparatus includes:
a sending unit 1100, configured to send first control information to a terminal, where the first control information includes one or more of the following indication information:
first indication information, where the first indication information is used to indicate whether a sidelink transmission associated with the first control information includes a sidelink positioning reference signal (SL PRS) transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate whether a PSSCH associated with the first control information carries SL data;
fifth indication information, where the fifth indication information is used to indicate SL PRS resource pool type information configured by a first communication device, and/or SL PRS resource pool type information that the terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

FIG. 12 is a schematic structural diagram of an apparatus for receiving information provided by an embodiment of the present disclosure. As shown in FIG. 12, the apparatus includes:
a receiving unit 1200, configured to receive first control information sent by a first communication device, where the first control information includes one or more of the following indication information:
first indication information, where the first indication information is used to indicate whether a sidelink transmission associated with the first control information includes a sidelink positioning reference signal (SL PRS) transmission;
second indication information, where the second indication information is used to indicate SL PRS resource information carried in the first control information;
third indication information, where the third indication information is used to indicate SL PRS measurement report information carried in a physical sidelink shared channel (PSSCH) associated with the first control information;
fourth indication information, where the fourth indication information is used to indicate whether a PSSCH associated with the first control information carries SL data;
fifth indication information, where the fifth indication information is used to indicate SL PRS resource pool type information configured by the first communication device, and/or SL PRS resource pool type information that a terminal needs to configure.

In some embodiments, the first indication information indicates one of the following through at least 1 bit:
the sidelink transmission associated with the first control information does not include the SL PRS transmission;
the sidelink transmission associated with the first control information includes the SL PRS transmission.

In some embodiments, the first indication information indicates one of the following through at least 2 bits:
the sidelink transmission associated with the first control information does not include an SL PRS transmission in a dedicated resource pool or an SL PRS transmission in a shared resource pool;
the sidelink transmission associated with the first control information includes an SL PRS transmission in a dedicated resource pool and does not include an SL PRS transmission in a shared resource pool;
the sidelink transmission associated with the first control information does not include an SL PRS transmission in a dedicated resource pool and includes an SL PRS transmission in a shared resource pool;
the sidelink transmission associated with the first control information includes an SL PRS transmission in a dedicated resource pool and an SL PRS transmission in a shared resource pool.

In some embodiments, the second indication information is used to indicate one of:
the SL PRS resource information carried in the first control information is an SL PRS resource identifier (ID);
the SL PRS resource information carried in the first control information is SL PRS time-frequency resource information.

In some embodiments, each SL PRS resource ID is configured to uniquely determine a resource occupation of one SL PRS resource within one slot.

In some embodiments, the SL PRS time-frequency resource information includes one or more of:
information for indicating a granularity of SL PRS resource allocation;
information for indicating an SL PRS time-domain resource allocation;
information for indicating an SL PRS frequency-domain resource allocation;
information for indicating an SL PRS resource element (RE) offset allocation.

In some embodiments, the granularity of SL PRS resource allocation includes one or more of:
a sub-channel level; a resource block (RB) level; an SL PRS resource level; an SL PRS resource set level.

In some embodiments, the information for indicating the SL PRS time-domain resource allocation includes one or more of:
a start time-domain unit index number of an SL PRS resource; an end time-domain unit index number of an SL PRS resource; a quantity of consecutive time-domain units of an SL PRS resource.

In some embodiments, the information for indicating the SL PRS frequency-domain resource allocation includes one or more of:
a start frequency-domain unit index number of an SL PRS resource; an end frequency-domain unit index number of an SL PRS resource; a quantity of consecutive frequency-domain units of an SL PRS resource.

In some embodiments, the information for indicating the SL PRS RE offset allocation includes one or more of:
an RE offset of an SL PRS resource; a comb size of an SL PRS resource.

In some embodiments, the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool;
an SL PRS measurement report carried in the PSSCH associated with the first control information includes a measurement report corresponding to an SL PRS in a shared resource pool and a measurement report corresponding to an SL PRS in a dedicated resource pool.

In some embodiments, the third indication information further includes one or more of:
a sidelink positioning protocol (SLPP) session ID; measurement report configuration information; PSSCH resource reservation information for a measurement report.

In some embodiments, in a case where the PSSCH associated with the first control information does not carry the SL data, the PSSCH associated with the first control information carries a media access control layer control element (MAC CE) and a MAC header, and the MAC CE or the MAC header includes a Layer-2 source ID.

In some embodiments, the SL PRS resource pool type information configured by the first communication device includes one of:
the SL PRS resource pool configured by the first communication device is a shared resource pool;
the SL PRS resource pool configured by the first communication device is a dedicated resource pool;
the SL PRS resource pool configured by the first communication device includes a shared resource pool and a dedicated resource pool.

In some embodiments, the SL PRS resource pool type information that the terminal needs to configure includes one of:
the terminal needs to configure a shared resource pool;
the terminal needs to configure a dedicated resource pool;
the terminal needs to configure a shared resource pool and a dedicated resource pool.

In some embodiments, the first control information further includes one or more of:
a source terminal ID; a target terminal ID; a resource reservation period; an SL-PRS priority; a broadcast type; an SL-PRS request; a terminal type.

In some embodiments, the dedicated resource pool is a resource pool dedicated for SL PRS transmission, and the shared resource pool is a resource pool shared for SL PRS transmission and SL data transmission.

In some embodiments, the first control information is carried by one or more of:
first-stage sidelink control information (SCI); second-stage SCI; downlink control information (DCI); radio resource control (RRC) signaling; SLPP signaling.

**It** should be noted that the division of units in the embodiments of the present disclosure is schematic, merely a logical function division, and there may be other division manners in actual implementation. In addition, the functional units in the various embodiments of the present disclosure may be integrated into one processing unit, or each unit may exist physically alone, or two or more units may be integrated into one unit. The above integrated units may be implemented in the form of hardware or software functional units.

**If** the integrated unit is implemented in the form of a software functional unit and sold or used as an independent product, it may be stored in a processor-readable storage medium. Based on this understanding, the technical solution of the present disclosure essentially, or the part contributing to the prior art, or all or part of the technical solution, may be embodied in the form of a software product. The computer software product is stored in a storage medium and includes several instructions for causing a computer device (which may be a personal computer, a server, a network device, etc.) or a processor to perform all or part of the steps of the methods described in the various embodiments of the present disclosure. The aforementioned storage medium includes: U disk, mobile hard disk, read-only memory (ROM), random access memory (RAM), magnetic disk, optical disk, and various media capable of storing program code.

It should be noted here that the apparatus provided by the embodiments of the present disclosure can implement all the method steps implemented by the above method embodiments and achieve the same technical effects. Details and beneficial effects that are the same as those in the method embodiments are not repeated here.

In another aspect, an embodiment of the present disclosure further provides a non-transitory readable storage medium. The non-transitory readable storage medium stores a computer program, and the computer program is configured to cause a processor to execute the method provided by any of the above embodiments.

It should be noted here that the non-transitory readable storage medium provided by the embodiments of the present disclosure can implement all the method steps implemented by the above method embodiments and achieve the same technical effects. Details and beneficial effects that are the same as those in the method embodiments are not repeated here.

The non-transitory readable storage medium may be any available medium or data storage device that a computer can access, including but not limited to magnetic memory (e.g., floppy disk, hard disk, magnetic tape, magneto-optical disk (MO), etc.), optical memory (e.g., CD, DVD, BD, HVD, etc.), and semiconductor memory (e.g., ROM, EPROM, EEPROM, non-volatile memory (NAND FLASH), solid-state drive (SSD)), etc.

The technical solutions provided by the embodiments of the present disclosure can be applied to various systems, especially 5G systems. For example, applicable systems may be a Global System for Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, etc. These various systems all include terminal devices and network devices. The system may also include a core network part, such as an Evolved Packet System (EPS), a 5G System (5GS), etc.

The terminal involved in the embodiments of the present disclosure may refer to a device that provides voice and/or data connectivity to users, a handheld device with wireless connection capability, or other processing device connected to a wireless modem. The name of the terminal may vary in different systems. For example, in a 5G system, the terminal may be referred to as User Equipment (UE). A wireless terminal device may communicate with one or more core networks (CN) via a Radio Access Network (RAN). The wireless terminal device may be a mobile terminal device, such as a mobile phone (or "cellular" phone) and a computer with a mobile terminal device. For example, it may be a portable, pocket-sized, handheld, computer-built-in, or vehicle-mounted mobile device that exchanges language and/or data with the wireless access network. For example, a Personal Communication Service (PCS) phone, a cordless phone, a Session Initiated Protocol (SIP) phone, a Wireless Local Loop (WLL) station, a Personal Digital Assistant (PDA), etc. A wireless terminal device may also be referred to as a system, a subscriber unit, a subscriber station, a mobile station, a mobile, a remote station, an access point, a remote terminal device, an access terminal device, a user terminal device, a user agent, a user device. The present disclosure does not limit it.

The network device involved in the embodiments of the present disclosure may be a base station, which may include multiple cells providing services for terminals. Depending on the specific application scenario, the base station may also be referred to as an access point, or may be a device in an access network that communicates with a wireless terminal device via one or more sectors on the air interface, or may have other names. The network device may be used to exchange received air frames with Internet Protocol (IP) packets, serving as a router between the wireless terminal device and the rest of the access network, where the rest of the access network may include an IP communication network. The network device may also coordinate the management of attributes on the air interface. For example, the network device involved in the embodiments of the present disclosure may be a base station (Base Transceiver Station, BTS) in GSM or CDMA, a NodeB in WCDMA, an evolved Node B (eNB or e-NodeB) in an LTE system, a 5G base station (gNB) in a 5G network architecture (next generation system), a Home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be geographically separated.

The network device and the terminal may each use one or more antennas for Multi-Input Multi-Output (MIMO) transmission. MIMO transmission may be Single User MIMO (SU-MIMO) or Multi-User MIMO (MU-MIMO). According to the form and quantity of antenna combinations, MIMO transmission may be 2D-MIMO, 3D-MIMO, FD-MIMO, or massive-MIMO, or may be diversity transmission, precoding transmission, or beamforming transmission, etc.

Those skilled in the art will understand that the embodiments of the present disclosure may be provided as a method, a system, or a computer program product. Therefore, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to magnetic disk storage, optical storage, etc.) having computer-usable program code embodied therein.

The present disclosure is described with reference to flowchart illustrations and/or block diagrams of methods, apparatus (systems), and computer program products according to embodiments of the present disclosure. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general-purpose computer, special-purpose computer, embedded processor, or other programmable data processing apparatus to produce a machine, such that the instructions, which execute via the processor of the computer or other programmable data processing apparatus, create means for implementing the functions specified in one or more flows of the flowchart and/or one or more blocks of the block diagram.

These processor-executable instructions may also be stored in a processor-readable memory that can direct a computer or other programmable data processing apparatus to function in a particular manner, such that the instructions stored in the processor-readable memory produce an article of manufacture including instruction means which implement the function specified in one or more flows of the flowchart and/or one or more blocks of the block diagram.

These processor-executable instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in one or more flows of the flowchart and/or one or more blocks of the block diagram.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A method for indicating information, applied to a first communication device, comprising:
sending first control information to a terminal, wherein the first control information comprises one or more of:
first indication information used to indicate that a sidelink transmission associated with the first control information comprises a sidelink positioning reference signal (SL PRS) transmission or does not comprise an SL PRS transmission;
second indication information used to indicate SL PRS resource information carried in the first control information;
third indication information used to indicate SL PRS measurement report information carried in a physical sidelink shared channel (PSSCH) associated with the first control information;
fourth indication information used to indicate that a PSSCH associated with the first control information carries SL data or does not carry SL data; or
fifth indication information used to indicate SL PRS resource pool type information configured by the first communication device and/or SL PRS resource pool type information that the terminal needs to configure.

2. The method for indicating information according to claim 1, wherein the first indication information indicates one of the following through at least 1 bit:
the sidelink transmission associated with the first control information does not comprise the SL PRS transmission; or
the sidelink transmission associated with the first control information comprises the SL PRS transmission.

3. The method for indicating information according to claim 1, wherein the first indication information indicates one of the following through at least 2 bits:
the sidelink transmission associated with the first control information does not comprise an SL PRS transmission in a dedicated resource pool or an SL PRS transmission in a shared resource pool;
the sidelink transmission associated with the first control information comprises an SL PRS transmission in a dedicated resource pool and does not comprise an SL PRS transmission in a shared resource pool;
the sidelink transmission associated with the first control information does not comprise an SL PRS transmission in a dedicated resource pool and comprises an SL PRS transmission in a shared resource pool; or
the sidelink transmission associated with the first control information comprises an SL PRS transmission in a dedicated resource pool and an SL PRS transmission in a shared resource pool.

4. The method for indicating information according to claim 1, wherein the second indication information is used to indicate one of:
the SL PRS resource information carried in the first control information is an SL PRS resource identifier (ID); or
the SL PRS resource information carried in the first control information is SL PRS time-frequency resource information.

5. The method for indicating information according to claim 4, wherein the SL PRS resource ID is configured to uniquely determine a resource occupation of one SL PRS resource within one slot.

6. The method for indicating information according to claim 4, wherein the SL PRS time-frequency resource information comprises one or more of:
information for indicating a granularity of SL PRS resource allocation;
information for indicating an SL PRS time-domain resource allocation;
information for indicating an SL PRS frequency-domain resource allocation; or
information for indicating an SL PRS resource element (RE) offset allocation.

7. The method for indicating information according to claim 6, wherein the granularity of SL PRS resource allocation comprises one or more of:
a sub-channel level, a resource block (RB) level, an SL PRS resource level, or an SL PRS resource set level.

8. The method for indicating information according to claim 6, wherein the information for indicating the SL PRS time-domain resource allocation comprises one or more of:
a start time-domain unit index number of an SL PRS resource, an end time-domain unit index number of an SL PRS resource, or a quantity of consecutive time-domain units of an SL PRS resource.

9. The method for indicating information according to claim 6, wherein the information for indicating the SL PRS frequency-domain resource allocation comprises one or more of:
a start frequency-domain unit index number of an SL PRS resource, an end frequency-domain unit index number of an SL PRS resource, or a quantity of consecutive frequency-domain units of an SL PRS resource.

10. The method for indicating information according to claim 6, wherein the information for indicating the SL PRS RE offset allocation comprises one or more of:
an RE offset of an SL PRS resource or a comb size of an SL PRS resource.

11. The method for indicating information according to claim 1, wherein the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool; or
an SL PRS measurement report carried in the PSSCH associated with the first control information comprises a measurement report corresponding to an SL PRS in a shared resource pool and a measurement report corresponding to an SL PRS in a dedicated resource pool.

12. The method for indicating information according to claim 1 or 11, wherein the third indication information further comprises one or more of:
a sidelink positioning protocol (SLPP) session ID, measurement report configuration information, or PSSCH resource reservation information for a measurement report.

13. The method for indicating information according to claim 1, wherein in a case where the PSSCH associated with the first control information does not carry the SL data, the PSSCH associated with the first control information carries a media access control layer control element (MAC CE) and a MAC header, and the MAC CE or the MAC header comprises a Layer-2 source ID.

14. The method for indicating information according to claim 1, wherein the first control information further comprises one or more of:
a source terminal ID, a target terminal ID, a resource reservation period, an SL-PRS priority, a broadcast type, an SL-PRS request, or a terminal type.

15. The method for indicating information according to claim 1, wherein the first control information is carried by one or more of:
first-stage sidelink control information (SCI), second-stage SCI, downlink control information (DCI), a radio resource control (RRC) signaling, or an SLPP signaling.

16. A method for receiving information, applied to a terminal, comprising:
receiving first control information sent by a first communication device, wherein the first control information comprises one or more of:
first indication information used to indicate that a sidelink transmission associated with the first control information comprises a sidelink positioning reference signal (SL PRS) transmission or does not comprise an SL PRS transmission;
second indication information used to indicate SL PRS resource information carried in the first control information;
third indication information used to indicate SL PRS measurement report information carried in a physical sidelink shared channel (PSSCH) associated with the first control information;
fourth indication information used to indicate that a PSSCH associated with the first control information carries SL data or does not carry SL data; or
fifth indication information used to indicate SL PRS resource pool type information configured by the first communication device and/or SL PRS resource pool type information that the terminal needs to configure.

17. The method for receiving information according to claim 16, wherein the first indication information indicates one of the following through at least 1 bit:
the sidelink transmission associated with the first control information does not comprise the SL PRS transmission; or
the sidelink transmission associated with the first control information comprises the SL PRS transmission.

18. The method for receiving information according to claim 16, wherein the first indication information indicates one of the following through at least 2 bits:
the sidelink transmission associated with the first control information does not comprise an SL PRS transmission in a dedicated resource pool or an SL PRS transmission in a shared resource pool;
the sidelink transmission associated with the first control information comprises an SL PRS transmission in a dedicated resource pool and does not comprise an SL PRS transmission in a shared resource pool;
the sidelink transmission associated with the first control information does not comprise an SL PRS transmission in a dedicated resource pool and comprises an SL PRS transmission in a shared resource pool; or
the sidelink transmission associated with the first control information comprises an SL PRS transmission in a dedicated resource pool and an SL PRS transmission in a shared resource pool.

19. The method for receiving information according to claim 16, wherein the second indication information is used to indicate one of:
the SL PRS resource information carried in the first control information is an SL PRS resource identifier (ID); or
the SL PRS resource information carried in the first control information is SL PRS time-frequency resource information.

20. The method for receiving information according to claim 19, wherein the SL PRS resource ID is configured to uniquely determine a resource occupation of one corresponding SL PRS resource within one slot.

21. The method for receiving information according to claim 19, wherein the SL PRS time-frequency resource information comprises one or more of:
information for indicating a granularity of SL PRS resource allocation;
information for indicating an SL PRS time-domain resource allocation;
information for indicating an SL PRS frequency-domain resource allocation; or
information for indicating an SL PRS resource element (RE) offset allocation.

22. The method for receiving information according to claim 21, wherein the granularity of SL PRS resource allocation comprises one or more of:
a sub-channel level, a resource block (RB) level, an SL PRS resource level, or an SL PRS resource set level.

23. The method for receiving information according to claim 21, wherein the information for indicating the SL PRS time-domain resource allocation comprises one or more of:
a start time-domain unit index number of an SL PRS resource, an end time-domain unit index number of an SL PRS resource, or a quantity of consecutive time-domain units of an SL PRS resource.

24. The method for receiving information according to claim 21, wherein the information for indicating the SL PRS frequency-domain resource allocation comprises one or more of:
a start frequency-domain unit index number of an SL PRS resource, an end frequency-domain unit index number of an SL PRS resource, or a quantity of consecutive frequency-domain units of an SL PRS resource.

25. The method for receiving information according to claim 21, wherein the information for indicating the SL PRS RE offset allocation comprises one or more of:
an RE offset of an SL PRS resource or a comb size of an SL PRS resource.

26. The method for receiving information according to claim 16, wherein the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool; or
an SL PRS measurement report carried in the PSSCH associated with the first control information comprises a measurement report corresponding to an SL PRS in a shared resource pool and a measurement report corresponding to an SL PRS in a dedicated resource pool.

27. The method for receiving information according to claim 16 or 26, wherein the third indication information further comprises one or more of:
a sidelink positioning protocol (SLPP) session ID, measurement report configuration information, or PSSCH resource reservation information for a measurement report.

28. The method for receiving information according to claim 16, wherein in a case where the PSSCH associated with the first control information does not carry the SL data, the PSSCH associated with the first control information carries a media access control layer control element (MAC CE) and a MAC header, and the MAC CE or the MAC header comprises a Layer-2 source ID.

29. The method for receiving information according to claim 16, wherein the first control information further comprises one or more of:
a source terminal ID, a target terminal ID, a resource reservation period, an SL-PRS priority, a broadcast type, an SL-PRS request, or a terminal type.

30. The method for receiving information according to claim 16, wherein the first control information is carried by one or more of:
first-stage sidelink control information (SCI), second-stage SCI, downlink control information (DCI), a radio resource control (RRC) signaling, or an SLPP signaling.

31. A first communication device, comprising a memory, a transceiver and a processor;
wherein the memory is configured to store a computer program, the transceiver is configured to send and receive data under a control of the processor, and the processor is configured to read the computer program in the memory to perform:
sending first control information to a terminal, wherein the first control information comprises one or more of:
first indication information used to indicate that a sidelink transmission associated with the first control information comprises a sidelink positioning reference signal (SL PRS) transmission or does not comprise an SL PRS transmission;
second indication information used to indicate SL PRS resource information carried in the first control information;
third indication information used to indicate SL PRS measurement report information carried in a physical sidelink shared channel (PSSCH) associated with the first control information;
fourth indication information used to indicate that a PSSCH associated with the first control information carries SL data or does not carry SL data; or
fifth indication information used to indicate SL PRS resource pool type information configured by the first communication device and/or SL PRS resource pool type information that the terminal needs to configure.

32. The first communication device according to claim 31, wherein the first indication information indicates one of the following through at least 1 bit:
the sidelink transmission associated with the first control information does not comprise the SL PRS transmission; or
the sidelink transmission associated with the first control information comprises the SL PRS transmission.

33. The first communication device according to claim 31, wherein the first indication information indicates one of the following through at least 2 bits:
the sidelink transmission associated with the first control information does not comprise an SL PRS transmission in a dedicated resource pool or an SL PRS transmission in a shared resource pool;
the sidelink transmission associated with the first control information comprises an SL PRS transmission in a dedicated resource pool and does not comprise an SL PRS transmission in a shared resource pool;
the sidelink transmission associated with the first control information does not comprise an SL PRS transmission in a dedicated resource pool and comprises an SL PRS transmission in a shared resource pool; or
the sidelink transmission associated with the first control information comprises an SL PRS transmission in a dedicated resource pool and an SL PRS transmission in a shared resource pool.

34. The first communication device according to claim 31, wherein the second indication information is used to indicate one of:
the SL PRS resource information carried in the first control information is an SL PRS resource identifier (ID); or
the SL PRS resource information carried in the first control information is SL PRS time-frequency resource information.

35. The first communication device according to claim 34, wherein the SL PRS resource ID is configured to uniquely determine a resource occupation of one corresponding SL PRS resource within one slot.

36. The first communication device according to claim 34, wherein the SL PRS time-frequency resource information comprises one or more of:
information for indicating a granularity of SL PRS resource allocation;
information for indicating an SL PRS time-domain resource allocation;
information for indicating an SL PRS frequency-domain resource allocation; or
information for indicating an SL PRS resource element (RE) offset allocation.

37. The first communication device according to claim 36, wherein the granularity of SL PRS resource allocation comprises one or more of:
a sub-channel level, a resource block (RB) level, an SL PRS resource level, or an SL PRS resource set level.

38. The first communication device according to claim 36, wherein the information for indicating the SL PRS time-domain resource allocation comprises one or more of:
a start time-domain unit index number of an SL PRS resource, an end time-domain unit index number of an SL PRS resource, or a quantity of consecutive time-domain units of an SL PRS resource.

39. The first communication device according to claim 36, wherein the information for indicating the SL PRS frequency-domain resource allocation comprises one or more of:
a start frequency-domain unit index number of an SL PRS resource, an end frequency-domain unit index number of an SL PRS resource, or a quantity of consecutive frequency-domain units of an SL PRS resource.

40. The first communication device according to claim 36, wherein the information for indicating the SL PRS RE offset allocation comprises one or more of:
an RE offset of an SL PRS resource or a comb size of an SL PRS resource.

41. The first communication device according to claim 31, wherein the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool; or
an SL PRS measurement report carried in the PSSCH associated with the first control information comprises a measurement report corresponding to an SL PRS in a shared resource pool and a measurement report corresponding to an SL PRS in a dedicated resource pool.

42. The first communication device according to claim 31 or 41, wherein the third indication information further comprises one or more of:
a sidelink positioning protocol (SLPP) session ID, measurement report configuration information, or PSSCH resource reservation information for a measurement report.

43. The first communication device according to claim 31, wherein in a case where the PSSCH associated with the first control information does not carry the SL data, the PSSCH associated with the first control information carries a media access control layer control element (MAC CE) and a MAC header, and the MAC CE or the MAC header comprises a Layer-2 source ID.

44. The first communication device according to claim 31, wherein the first control information further comprises one or more of:
a source terminal ID, a target terminal ID, a resource reservation period, an SL-PRS priority, a broadcast type, an SL-PRS request, or a terminal type.

45. The first communication device according to claim 31, wherein the first control information is carried by one or more of:
first-stage sidelink control information (SCI), second-stage SCI, downlink control information (DCI), a radio resource control (RRC) signaling, or an SLPP signaling.

46. A terminal, comprising a memory, a transceiver, and a processor;
wherein the memory is configured to store a computer program, the transceiver is configured to send and receive data under a control of the processor, and the processor is configured to read the computer program in the memory to perform: receiving first control information sent by a first communication device, wherein the first control information comprises one or more of:
first indication information used to indicate that a sidelink transmission associated with the first control information comprises a sidelink positioning reference signal (SL PRS) transmission or does not comprise an SL PRS transmission;
second indication information used to indicate SL PRS resource information carried in the first control information;
third indication information used to indicate SL PRS measurement report information carried in a physical sidelink shared channel (PSSCH) associated with the first control information;
fourth indication information used to indicate that a PSSCH associated with the first control information carries SL data or does not carry SL data; or
fifth indication information used to indicate SL PRS resource pool type information configured by the first communication device and/or SL PRS resource pool type information that the terminal needs to configure.

47. The terminal according to claim 46, wherein the first indication information indicates one of the following through at least 1 bit:
the sidelink transmission associated with the first control information does not comprise the SL PRS transmission; or
the sidelink transmission associated with the first control information comprises the SL PRS transmission.

48. The terminal according to claim 46, wherein the first indication information indicates one of the following through at least 2 bits:
the sidelink transmission associated with the first control information does not comprise an SL PRS transmission in a dedicated resource pool or an SL PRS transmission in a shared resource pool;
the sidelink transmission associated with the first control information comprises an SL PRS transmission in a dedicated resource pool and does not comprise an SL PRS transmission in a shared resource pool;
the sidelink transmission associated with the first control information does not comprise an SL PRS transmission in a dedicated resource pool and comprises an SL PRS transmission in a shared resource pool; or
the sidelink transmission associated with the first control information comprises an SL PRS transmission in a dedicated resource pool and an SL PRS transmission in a shared resource pool.

49. The terminal according to claim 46, wherein the second indication information is used to indicate one of:
the SL PRS resource information carried in the first control information is an SL PRS resource identifier (ID); or
the SL PRS resource information carried in the first control information is SL PRS time-frequency resource information.

50. The terminal according to claim 49, wherein the SL PRS resource ID is configured to uniquely determine a resource occupation of one corresponding SL PRS resource within one slot.

51. The terminal according to claim 49, wherein the SL PRS time-frequency resource information comprises one or more of:
information for indicating a granularity of SL PRS resource allocation;
information for indicating an SL PRS time-domain resource allocation;
information for indicating an SL PRS frequency-domain resource allocation; or
information for indicating an SL PRS resource element (RE) offset allocation.

52. The terminal according to claim 51, wherein the granularity of SL PRS resource allocation comprises one or more of:
a sub-channel level, a resource block (RB) level, an SL PRS resource level, or an SL PRS resource set level.

53. The terminal according to claim 51, wherein the information for indicating the SL PRS time-domain resource allocation comprises one or more of:
a start time-domain unit index number of an SL PRS resource, an end time-domain unit index number of an SL PRS resource, or a quantity of consecutive time-domain units of an SL PRS resource.

54. The terminal according to claim 51, wherein the information for indicating the SL PRS frequency-domain resource allocation comprises one or more of:
a start frequency-domain unit index number of an SL PRS resource, an end frequency-domain unit index number of an SL PRS resource, or a quantity of consecutive frequency-domain units of an SL PRS resource.

55. The terminal according to claim 51, wherein the information for indicating the SL PRS RE offset allocation comprises one or more of:
an RE offset of an SL PRS resource or a comb size of an SL PRS resource.

56. The terminal according to claim 46, wherein the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool; or
an SL PRS measurement report carried in the PSSCH associated with the first control information comprises a measurement report corresponding to an SL PRS in a shared resource pool and a measurement report corresponding to an SL PRS in a dedicated resource pool.

57. The terminal according to claim 46 or 56, wherein the third indication information further comprises one or more of:
a sidelink positioning protocol (SLPP) session ID, measurement report configuration information, or PSSCH resource reservation information for a measurement report.

58. The terminal according to claim 46, wherein in a case where the PSSCH associated with the first control information does not carry the SL data, the PSSCH associated with the first control information carries a media access control layer control element (MAC CE) and a MAC header, and the MAC CE or the MAC header comprises a Layer-2 source ID.

59. The terminal according to claim 46, wherein the first control information further comprises one or more of:
a source terminal ID, a target terminal ID, a resource reservation period, an SL-PRS priority, a broadcast type, an SL-PRS request, or a terminal type.

60. The terminal according to claim 46, wherein the first control information is carried by one or more of:
first-stage sidelink control information (SCI), second-stage SCI, downlink control information (DCI), a radio resource control (RRC) signaling, or an SLPP signaling.

61. An apparatus for indicating information, comprising:
a sending unit configured to send first control information to a terminal, wherein the first control information comprises one or more of:
first indication information used to indicate that a sidelink transmission associated with the first control information comprises a sidelink positioning reference signal (SL PRS) transmission or does not comprise an SL PRS transmission;
second indication information used to indicate SL PRS resource information carried in the first control information;
third indication information used to indicate SL PRS measurement report information carried in a physical sidelink shared channel (PSSCH) associated with the first control information;
fourth indication information used to indicate that a PSSCH associated with the first control information carries SL data or does not carry SL data; or
fifth indication information used to indicate SL PRS resource pool type information configured by a first communication device and/or SL PRS resource pool type information that the terminal needs to configure.

62. The apparatus for indicating information according to claim 61, wherein the first indication information indicates one of the following through at least 1 bit:
the sidelink transmission associated with the first control information does not comprise the SL PRS transmission; or
the sidelink transmission associated with the first control information comprises the SL PRS transmission.

63. The apparatus for indicating information according to claim 61, wherein the first indication information indicates one of the following through at least 2 bits:
the sidelink transmission associated with the first control information does not comprise an SL PRS transmission in a dedicated resource pool or an SL PRS transmission in a shared resource pool;
the sidelink transmission associated with the first control information comprises an SL PRS transmission in a dedicated resource pool and does not comprise an SL PRS transmission in a shared resource pool;
the sidelink transmission associated with the first control information does not comprise an SL PRS transmission in a dedicated resource pool and comprises an SL PRS transmission in a shared resource pool; or
the sidelink transmission associated with the first control information comprises an SL PRS transmission in a dedicated resource pool and an SL PRS transmission in a shared resource pool.

64. The apparatus for indicating information according to claim 61, wherein the second indication information is used to indicate one of:
the SL PRS resource information carried in the first control information is an SL PRS resource identifier (ID); or
the SL PRS resource information carried in the first control information is SL PRS time-frequency resource information.

65. The apparatus for indicating information according to claim 64, wherein the SL PRS resource ID is configured to uniquely determine a resource occupation of one corresponding SL PRS resource within one slot.

66. The apparatus for indicating information according to claim 64, wherein the SL PRS time-frequency resource information comprises one or more of:
information for indicating a granularity of SL PRS resource allocation;
information for indicating an SL PRS time-domain resource allocation;
information for indicating an SL PRS frequency-domain resource allocation; or
information for indicating an SL PRS resource element (RE) offset allocation.

67. The apparatus for indicating information according to claim 66, wherein the granularity of SL PRS resource allocation comprises one or more of:
a sub-channel level, a resource block (RB) level, an SL PRS resource level, or an SL PRS resource set level.

68. The apparatus for indicating information according to claim 66, wherein the information for indicating the SL PRS time-domain resource allocation comprises one or more of:
a start time-domain unit index number of an SL PRS resource, an end time-domain unit index number of an SL PRS resource, or a quantity of consecutive time-domain units of an SL PRS resource.

69. The apparatus for indicating information according to claim 66, wherein the information for indicating the SL PRS frequency-domain resource allocation comprises one or more of:
a start frequency-domain unit index number of an SL PRS resource, an end frequency-domain unit index number of an SL PRS resource, or a quantity of consecutive frequency-domain units of an SL PRS resource.

70. The apparatus for indicating information according to claim 66, wherein the information for indicating the SL PRS RE offset allocation comprises one or more of:
an RE offset of an SL PRS resource or a comb size of an SL PRS resource.

71. The apparatus for indicating information according to claim 61, wherein the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool; or
an SL PRS measurement report carried in the PSSCH associated with the first control information comprises a measurement report corresponding to an SL PRS in a shared resource pool and a measurement report corresponding to an SL PRS in a dedicated resource pool.

72. The apparatus for indicating information according to claim 61 or 71, wherein the third indication information further comprises one or more of:
a sidelink positioning protocol (SLPP) session ID, measurement report configuration information, or PSSCH resource reservation information for a measurement report.

73. The apparatus for indicating information according to claim 61, wherein in a case where the PSSCH associated with the first control information does not carry the SL data, the PSSCH associated with the first control information carries a media access control layer control element (MAC CE) and a MAC header, and the MAC CE or the MAC header comprises a Layer-2 source ID.

74. The apparatus for indicating information according to claim 61, wherein the first control information further comprises one or more of:
a source terminal ID, a target terminal ID, a resource reservation period, an SL-PRS priority, a broadcast type, an SL-PRS request, or a terminal type.

75. The apparatus for indicating information according to claim 61, wherein the first control information is carried by one or more of:
first-stage sidelink control information (SCI), second-stage SCI, downlink control information (DCI), a radio resource control (RRC) signaling, or an SLPP signaling.

76. An apparatus for receiving information, comprising:
a receiving unit configured to receive first control information sent by a first communication device, wherein the first control information comprises one or more of:
first indication information used to indicate that a sidelink transmission associated with the first control information comprises a sidelink positioning reference signal (SL PRS) transmission or does not comprise an SL PRS transmission;
second indication information used to indicate SL PRS resource information carried in the first control information;
third indication information used to indicate SL PRS measurement report information carried in a physical sidelink shared channel (PSSCH) associated with the first control information;
fourth indication information used to indicate that a PSSCH associated with the first control information carries SL data or does not carry SL data; or
fifth indication information used to indicate SL PRS resource pool type information configured by the first communication device and/or SL PRS resource pool type information that a terminal needs to configure.

77. The apparatus for receiving information according to claim 76, wherein the first indication information indicates one of the following through at least 1 bit:
the sidelink transmission associated with the first control information does not comprise the SL PRS transmission; or
the sidelink transmission associated with the first control information comprises the SL PRS transmission.

78. The apparatus for receiving information according to claim 76, wherein the first indication information indicates one of the following through at least 2 bits:
the sidelink transmission associated with the first control information does not comprise an SL PRS transmission in a dedicated resource pool or an SL PRS transmission in a shared resource pool;
the sidelink transmission associated with the first control information comprises an SL PRS transmission in a dedicated resource pool and does not comprise an SL PRS transmission in a shared resource pool;
the sidelink transmission associated with the first control information does not comprise an SL PRS transmission in a dedicated resource pool and comprises an SL PRS transmission in a shared resource pool; or
the sidelink transmission associated with the first control information comprises an SL PRS transmission in a dedicated resource pool and an SL PRS transmission in a shared resource pool.

79. The apparatus for receiving information according to claim 76, wherein the second indication information is used to indicate one of:
the SL PRS resource information carried in the first control information is an SL PRS resource identifier (ID); or
the SL PRS resource information carried in the first control information is SL PRS time-frequency resource information.

80. The apparatus for receiving information according to claim 79, wherein the SL PRS resource ID is configured to uniquely determine a resource occupation of one corresponding SL PRS resource within one slot.

81. The apparatus for receiving information according to claim 79, wherein the SL PRS time-frequency resource information comprises one or more of:
information for indicating a granularity of SL PRS resource allocation;
information for indicating an SL PRS time-domain resource allocation;
information for indicating an SL PRS frequency-domain resource allocation; or
information for indicating an SL PRS resource element (RE) offset allocation.

82. The apparatus for receiving information according to claim 81, wherein the granularity of SL PRS resource allocation comprises one or more of:
a sub-channel level, a resource block (RB) level, an SL PRS resource level, or an SL PRS resource set level.

83. The apparatus for receiving information according to claim 81, wherein the information for indicating the SL PRS time-domain resource allocation comprises one or more of:
a start time-domain unit index number of an SL PRS resource, an end time-domain unit index number of an SL PRS resource, or a quantity of consecutive time-domain units of an SL PRS resource.

84. The apparatus for receiving information according to claim 81, wherein the information for indicating the SL PRS frequency-domain resource allocation comprises one or more of:
a start frequency-domain unit index number of an SL PRS resource, an end frequency-domain unit index number of an SL PRS resource, or a quantity of consecutive frequency-domain units of an SL PRS resource.

85. The apparatus for receiving information according to claim 81, wherein the information for indicating the SL PRS RE offset allocation comprises one or more of:
an RE offset of an SL PRS resource or a comb size of an SL PRS resource.

86. The apparatus for receiving information according to claim 76, wherein the third indication information indicates one of the following through at least 2 bits:
the PSSCH associated with the first control information does not carry an SL PRS measurement report;
an SL PRS measurement report carried in the PSSCH associated with the first control information is a measurement report corresponding to an SL PRS in a shared resource pool;
an SL PRS measurement report carried in the PSSCH associated with the first control information is a measurement report corresponding to an SL PRS in a dedicated resource pool; or
an SL PRS measurement report carried in the PSSCH associated with the first control information comprises a measurement report corresponding to an SL PRS in a shared resource pool and a measurement report corresponding to an SL PRS in a dedicated resource pool.

87. The apparatus for receiving information according to claim 76 or 86, wherein the third indication information further comprises one or more of:
a sidelink positioning protocol (SLPP) session ID, measurement report configuration information, or PSSCH resource reservation information for a measurement report.

88. The apparatus for receiving information according to claim 76, wherein in a case where the PSSCH associated with the first control information does not carry the SL data, the PSSCH associated with the first control information carries a media access control layer control element (MAC CE) and a MAC header, and the MAC CE or the MAC header comprises a Layer-2 source ID.

89. The apparatus for receiving information according to claim 76, wherein the first control information further comprises one or more of:
a source terminal ID, a target terminal ID, a resource reservation period, an SL-PRS priority, a broadcast type, an SL-PRS request, or a terminal type.

90. The apparatus for receiving information according to claim 76, wherein the first control information is carried by one or more of:
first-stage sidelink control information (SCI), second-stage SCI, downlink control information (DCI), a radio resource control (RRC) signaling, or an SLPP signaling.

91. A non-transitory readable storage medium, having stored therein a computer program, wherein the computer program is configured to cause a processor to perform the method according to any one of claims 1 to 15.

92. A non-transitory readable storage medium, having stored therein a computer program, wherein the computer program is configured to cause a processor to perform the method according to any one of claims 16 to 30.
